# EUROPÄISCHE PATENTSCHRIFT

(11) **EP 1 096 352 B1**
(45) Veröffentlichungstag und Bekanntmachung des Hinweises auf die Patenterteilung: **14.01.2004**
(21) Anmeldenummer: 00121941.9
(22) Anmeldetag: 09.10.2000
(51) Int. Cl.: G05D 23/00, G05D 23/27, H01L 21/00, H02K 11/00, H03F 3/20

(54) **Verfahren und Vorrichtung zur berührungslosen Temperaturregelung**
Device and method for contactless temperature-regulator
Dispositif et methode de régulation sans contact de température

(30) Priorität: 28.10.1999 DE 19951899
(43) Veröffentlichungstag der Anmeldung: 02.05.2001
(73) Patentinhaber: IMPAC Electronic GmbH, 60326 Frankfurt/Main (DE)
(72) Erfinder: Schiewe, Christian Dr., 01187 Dresden (DE); Tzschaschel, Claus-Peter, 39130 Magedeburg (DE); Gantz, Stefan, 61267 Neu-Anspach (DE)
(74) Vertreter: Weber, Dieter, Dr.

(56) Entgegenhaltungen:
- US-A- 5 334 251
- PATENT ABSTRACTS OF JAPAN vol. 007, no. 255 (E-210), 12. November 1983 (1983-11-12) & JP 58 141650 A (HITACHI SEISAKUSHO KK), 23. August 1983 (1983-08-23)
- PATENT ABSTRACTS OF JAPAN vol. 1996, no. 01, 31. Januar 1996 (1996-01-31) & JP 07 249944 A (NEC ENG LTD), 26. September 1995 (1995-09-26)

## Beschreibung

Die vorliegende Erfindung betrifft ein Verfahren zur berührungslosen Temperaturregelung, wobei die Temperatur mit einer Temperaturmeßeinrichtung berührungslos als Analogwert erfaßt und digitalisiert wird und wobei weiterhin ein digitaler Regler vorgesehen ist, welcher die erfaßte Temperatur verarbeitet und welcher ein von vorgegebenen Parametern und der gemessenen Temperatur abhängiges Stellsignal ausgibt.

Ebenso betrifft die vorliegende Erfindung auch eine Vorrichtung zur berührungslosen Temperaturregelung mit einer entsprechenden Temperaturmeßeinrichtung, die in einem Gehäuse aufgenommen ist, sowie mit einer entsprechenden, mindestens teilweise digital arbeitenden Meßelektronik, die ebenfalls in dem Gehäuse aufgenommen ist und die einen Analog/Digitalwandler zur Digitalisierung der analogen Meßwerte sowie mindestens einen Analogausgang für die weitere Verarbeitung und Verwendung eines von der gemessenen Temperatur abhängigen Analogsignals aufweist, und wobei die Vorrichtung weiterhin einen digitalen Regler zur Erzeugung einer Stellgrößenabhängigkeit von der gemessenen Temperatur und vorgegebenen Parametern aufweist.

Entsprechende Verfahren und Vorrichtungen sind schon seit längerem bekannt. Als Einrichtungen zur berührungslosen Temperaturmessung werden dabei im Regelfall Pyrometer verwendet, die in Abhängigkeit von der Intensität und gegebenenfalls auch dem Spektrum einer empfangenen Wärmestrahlung ein analoges Spannungs- oder Stromsignal erzeugen. Dieses Signal ist zwar ein Maß für die gemessene Temperatur, jedoch werden Strahlungsintensität und -spektrum auch von anderen Gegenständen, einschließlich der Meßeinrichtung selbst, beeinflußt, deren Temperatur nicht gemessen werden soll.

Zur Korrektur können sowohl rein mechanische Maßnahmen getroffen werden, wie z.B. zur Abschirmung von Strahlung, ebenso wie auch elektronische Korrekturen vorgenommen werden, die das als analoge Spannung erfaßte Meßsignal korrigieren.

Weiterhin ist es bereits bekannt, das erfaßte analoge Meßsignal zu digitalisieren und in digitalisierter Form weiterzuverarbeiten, insbesondere also z.B. auch die notwendigen Korrekturen an dem Meßsignal vorzunehmen, damit das verbleibende Signal tatsächlich ein zuverlässiges, reproduzierbares Maß für die tatsächliche Temperatur eines Gegenstandes bildet, dessen Temperatur geregelt werden soll.

Berührungslose Temperatursensoren, wie z.B. Pyrometer haben dabei den Vorteil, daß sie ihrerseits keinerlei Einfluß auf die Temperatur des Gegenstandes haben, dessen Temperatur geregelt werden soll und daß sie zum anderen die Temperaturwerte außerordentlich schnell erfassen und dementsprechend schnelle Reaktionen zur Temperaturkorrektur möglich sind.

Bei herkömmlichen Temperaturmeßeinrichtungen mit digitaler Elektronik weist die Elektronik zwar auch digitale Ausgänge auf, zur Weiterverarbeitung und Temperaturregelung werden jedoch die digitalen Signale erneut in ein Analogsignal umgewandelt und das Analogsignal wird dann wiederum einem externen Regler zugeführt. Wenn dieser Regler ein digitaler Regler ist, wovon die vorliegende Erfindung ausgeht, so wird das auf einen Analogeingang dieses Digitalreglers gegebene Signal nun erneut digitalisiert und in Abhängigkeit von vorgegebenen Regelparametern wird auf der Basis dieser Parameter und der erneut digitalisierten, gegebenenfalls bereits korrigierten Temperaturwerte, ein Stellsignal bzw. eine Stellgröße an einem Ausgang des Reglers bereitgestellt, der zumeist ein Analogausgang ist. Im einfachsten Fall wird z.B. eine zur gemessenen Temperatur proportionale Spannung am Ausgang des digitalen Reglers erzeugt, die wiederum dazu verwendet werden kann, die Spannungs- oder Stromzufuhr zu einem Heizelement, welches den in Rede stehenden Gegenstand aufheizt, zu steigern oder abzusenken, und zwar umgekehrt proportional zu der erzeugten Stellgröße oder aber proportional zur invertierten Stellgröße.

Selbstverständlich sind auch wesentlich kompliziertere Regelsysteme und nicht lineare Regelverfahren realisierbar.

Bei den herkömmlichen Systemen erfolgt die analoge Übertragung eines zuvor schon digitalisierten und erneut analog umgewandelten Signales von der Meßelektronik der Temperatureinrichtung zu einem digitalen Regler mit Analogeingang vor allem aus dem Grunde, weil die digitalen Schnittstellen von Reglern und Temperaturmeßeinrichtungen aufgrund ihrer eingeschränkten Übertragungsgeschwindigkeit meist nur zur Parametrierung und Prozeßvisualisierung geeignet sind. Insbesondere bei schnellen Temperaturveränderungen und bei dem Erfordernis schneller Regelvorgänge reicht die auf die Weise zu erzielende Regelgeschwindigkeit nicht aus, so daß zur Erhöhung der Übertragungsgeschwindigkeit ein analoges Signal von der Meßelektronik auf den Regler übertragen wird.

Gegenüber diesem Stand der Technik liegt der vorliegenden Erfindung die Aufgabe zugrunde, ein Verfahren und eine entsprechende Vorrichtung zur berührungslosen Temperaturregelung zu schaffen, welche extrem kurze Ansprechzeiten haben können und gleichzeitig einen relativ hohen Grad von Genauigkeit und Parametrierbarkeit aufweisen.

Hinsichtlich des eingangs genannten Verfahrens wird diese Aufgabe dadurch gelöst, daß die von der Meßelektronik erfaßten und erstmals digitalisierten Daten in ein und demselben Prozessor zwecks Temperaturbestimmung und Regelung verarbeitet werden, der in die Meßelektronik bzw. das Gehäuse der Meßelektronik integriert ist, so daß die Rohdaten innerhalb des Prozessors sowohl zur Ermittlung der aktuellen Temperatur als auch zur Berechnung und Erzeugung einer Stellgröße verwendet werden und damit der Ausgang der Meßelektronik in Form des Reglerausganges unmittelbar eine Stellgröße zur Beeinflussung der zu regelnden Temperatur eines Gegenstandes liefert.

Hinsichtlich der eingangs genannten Vorrichtung wird die der Erfindung zugrunde liegende Aufgabe dadurch gelöst, daß der digitale Regler direkt in den digitalen Teil der Temperaturmeßeinrichtung integriert ist, so daß der mindestens eine Analogausgang der Temperaturmeßeinrichtung ein analoger Ausgang des digitalen Reglers ist.

Vorzugsweise hat die Temperaturmeßeinrichtung bzw die Meßelektronik auch einen weiteren Analogausgang, dessen Signal ein Maß für die aktuelle Temperatur ist.

Auf diese Weise werden in vorteilhafter Weise die günstigen Eigenschaften digitaler Regler, nämlich hohe Genauigkeit, Parametrierbarkeit, Femwartung und Femdiagnose, mit dem schnellen analogen Meßverfahren verknüpft. Aufgrund der Eliminierung zusätzlicher Digital-Analogund Analog-Digital-Wandlungen hat der Regler bzw. hat die Meßelektronik eine kürzere Reaktionszeit, wobei außerdem noch die Genauigkeit der für die Regelung verwendeten, erfaßten Temperaturwerte verbessert ist, so daß auch die Regelung entsprechend genauer erfolgen kann.

Vor allem aber erfolgt die Bestimmung der aktuellen Temperatur auf bzw. in demselben Mikroprozessor, der auch die Berechnung der Stellgröße aufgrund vorgebbarer Parameter durchführt. Hierdurch kann die Reaktionszeit des Reglers drastisch verkürzt werden, da keinerlei weitere Umwandlungen der Daten Digital/Analog oder Umwandlung mehr erfolgen mussen, und da alle "on-Chip"-Vorgänge grundsätzlich wegen der relativ kurzen und optimierten Laufstrecken auf dem Mikroprozessor schneller ablaufen, als dies bei diversen zwischengeschalteten Schnittstellen möglich ist.

In einer bevorzugten Ausführungsform der Erfindung wird als Temperaturmeßeinrichtung ein Pyrometer verwendet, das heißt die betreffende Vorrichtung weist ein Pyrometer als berührungsloses Temperaturmeßgerät auf, ebenso wie eine entsprechende Elektronik. Grundsätzlich können alle im Stand der Technik bekannten Regler bzw. Regelverfahren für einen Regler gemäß der vorliegenden Erfindung verwendet werden. Typische Beispiele sind sogenannte Zweipunkt-Regler, das heißt Regler und Regelverfahren, bei denen ein oberer und ein unterer Grenzwert für eine Temperatur festgelegt wird, wobei eine Korrektur, das heißt eine Erhöhung der Heizleistung dann erfolgt, wenn der untere Grenzwert unterschritten wird und eine Drosselung der Heizleistung bzw. Abkühlung dann vorgenommen wird, wenn der obere Grenzwert überschritten wird. Wenn sich die Temperatur in dem Bereich zwischen den beiden Grenzwerten befindet, löst die Stellgröße keine Veränderung in der Heiz- bzw. Kühlleistung aus.

Ein anderes bekanntes Regelverfahren ist das sogenannte PID-Verfahren (wobei die Abkürzung PID für proportional-integral-differential steht). Der Proportionalteil reagiert dabei auf relative oder auch absolute Abweichungen des aktuellen Temperaturwerts vom gemessenen Temperaturwert, der Integralteil reagiert auf die Summe bzw. das Integral der bis dahin aufgetretenen Abweichungen und der Differentialteil reagiert auf die Geschwindigkeit einer aktuellen Temperaturänderung. Die Stellgröße ergibt sich dann durch Aufaddierung der drei Anteile, die jeweils noch mit einem veränderbaren Faktor multipliziert werden, wobei diese Faktoren die sogenannten Regelparameter sind.

Ein weiteres, in jüngerer Zeit bekannt gewordenes Regelverfahren funktioniert nach den Prinzipien der sogenannten fuzzy-Logik.

Zur genauen Temperaturbestimmung trägt nicht nur die unmittelbare Weiterverarbeitung der gemessenen und digitalisierten Daten in einem Regler bei, sondem es kann auch die Erfassung von Strahlung in mindestens zwei verschiedenen Spektralbereichen hinzugezogen werden, wobei die Temperaturmeßeinrichtung dementsprechend Sensoren aufweisen muß, die für mindestens diese zwei Spektralbereiche empfindlich sind.

Die Regler können insbesondere auch einen programmierbaren Mikroprozessor mit einem Speicher aufweisen, in den die gewünschten Regelparameter eingegeben werden können. Außerdem kann der Mikroprozessor in der Weise programmiert sein, daß er aus gemessenen Temperaturverläufen Regelparameter selbst ermittelt bzw. optimiert. Die Optimierung kann auch allein aufgrund äußerer Eingaben erfolgen. Dabei kann eine erneute Optimierung und Berechnung von Parametern auch automatisch beim Eintreten vorgebbarer Bedingungen ausgelöst werden.

Bei Verwendung eines Pyrometers kann die gemessene Temperaturstrahlung entweder durch eine an dem Gehäuse des Pyrometers vorgesehene Linsenoptik erfaßt werden oder es kann alternativ auch eine Lichtleiteroptik vorgesehen sein.

Weitere Vorteile und Anwendungsmöglichkeiten der vorliegenden Erfindung ergeben sich aus der nachstehend beschriebenen Zeichnung.

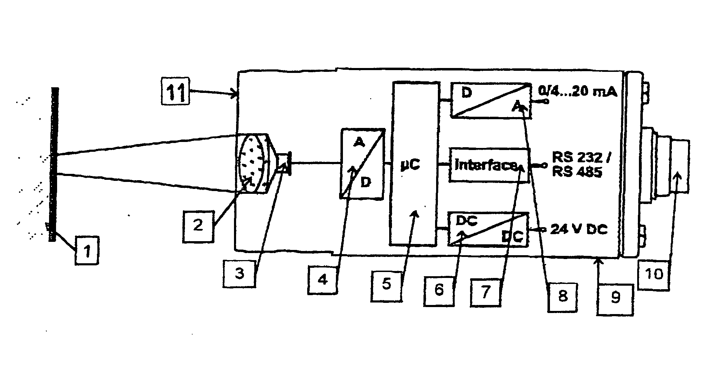

In der Figur erkennt man am linken Bildrand schematisch angedeutet eine Fläche oder Platte 1, deren Temperatur geregelt werden soll. Die Platte 1 kann z.B. durch einen Laser aufgeheizt werden, der sehr schnelle Temperaturveränderungen verursacht. Um daher eine entsprechende Erwärmung bzw. entsprechende Heizimpulse angemessen regeln zu können, ist eine sehr schnelle Temperaturerfassung und Ausgabe eines entsprechenden Regelparameters erforderlich.

Erfindungsgemäß erfolgt dies dadurch, daß in einem Gehäuse 11 mittels einer Optik 2 die von der Platte 1 ausgehende Strahlung auf den Detektor 3 fokussiert wird. Dieser liefert proportional zur Intensität der empfangenen Strahlung ein analoges Signal, welches auf einen Analog-Digital-Wandler 4 gegeben wird. Der Ausgang des Analog-Digital-Wandlers 4 ist mit einem Mikroprozessor 5 verbunden, der ein programmierbarer Mikroprozessor ist. In diesem wird aus den empfangenen digitalen Werten eine Temperatur des Gegenstandes 1 berechnet, wobei gegebenenfalls auch alle erforderlichen Korrekturen aufgrund von äußeren Strahlungseinflüssen vorgenommen werden. Weiterhin wird in dem selben Mikroprozessor die so bestimmte, gemessene Temperatur mit einem Temperatursollwert verglichen. In Abhängigkeit von der Differenz zwischen Temperatursoll- und Istwert und gegebenenfalls auch von anderen, sich aus dem Vergleich ergebenden Parametern (z.B. Integral- und Differentialteile), wird eine Stellgröße in digitalisierter Form auf den Digital-Analog-Wandler 8 gegeben. Dieser erzeugt an seinem Ausgang ein analoges Spannungs- bzw. Stromsignal, welches als Stellgröße für Heizeinrichtungen dient, z.B. für eine Lasersteuerung, um den gemessenen Temperaturwert zu korrigieren.

Über eine digitale Schnittstelle 7 können die für die Messung und die Regelung zu verwendenden Parameter in den Mikroprozessor eingegeben werden. Ebenso kann der Mikroprozessor die vorgegebenen bzw. gespeicherten und gegebenenfalls neu berechneten und optimierten Parameterwerte ausgeben. Mit 6 ist seine Stromversorgung bezeichnet. Alle Signal-, Parameter- und Stromversorgungszuleitungen werden über einen zentralen Stecker 10 aus dem Gehäuse 11 herausgeführt. Wie man sieht, ist der digitale Regler in Form des Mikroprozessors 5 und des Digital-Analog-Wandlers 8 in das Gehäuse integriert, so daß das Temperaturmeßgerät gleichzeitig auch als Temperaturregler verwendet werden kann.

## Patentansprüche

1. Verfahren zur berührungslosen Temperaturregelung, bei welchem die Temperatur mit einer Temperaturmeßeinrichtung berührungslos gemessen und als Analogwert erfaßt und anschließend digitalisiert wird, wobei weiterhin ein digitaler Regler vorgesehen ist, welcher in Abhängigkeit von der erfaßten Temperatur und von vorgegebenen Regelparametem eine Stellgröße ausgibt, **dadurch gekennzeichnet, daß** die von der Meßelektronik digitatisierten Meßdaten in ein und demselben Prozessor zwecks Temperaturbestimmung und Regelung verarbeitet werden, der in die Meßelektronik bzw. das Gehäuse der Meßelektronik integriert ist, so daß die Rohdaten innerhalb des Prozessors sowohl zur Ermittlung der aktuellen Temperatur als auch zur Berechnung und Erzeugung einer Stellgröße verwendet werden und damit der Ausgang der Meßelektronik in Form des Reglerausganges unmittelbar eine Stellgröße zur Beeinflussung der zu regelnden Temperatur eines Gegenstandes liefert.

2. Verfahren nach Anspruch 1, **dadurch gekennzeichnet, daß** als Temperaturmeßgerät ein Pyrometer verwendet wird und daß der digitale Regler im Gehäuse des Pyrometers untergebracht ist.

3. Verfahren nach Anspruch 1 oder 2, **dadurch gekennzeichnet, daß** eine die Temperatur verändernde Stellgröße nur bei Unterschreiten eines ersten oder bei Überschreiten eines zweiten Grenzwertes verändert wird.

4. Verfahren nach einem der Ansprüche 1 oder 2, **dadurch gekennzeichnet, daß** die Regelung nach dem PID-Verfahren (proportional-integral-differential-Verfahren) erfolgt.

5. Verfahren nach einem der Ansprüche 1 oder 2, **dadurch gekennzeichnet, daß** die Regelung auf der Basis von fuzzy-logic-Prinzipien erfolgt.

6. Verfahren nach einem der Ansprüche 1 bis 5, **dadurch gekennzeichnet, daß** zur Temperaturmessung die Strahlung des zu messenden Systems in mindestens zwei verschiedenen Spektralbereichen erfaßt wird.

7. Verfahren nach einem der Ansprüche 1 bis 6, **dadurch gekennzeichnet, daß** die Regelparameter auf der Basis gemessener Temperaturverläufe automatisch optimiert und gespeichert werden.

8. Verfahren nach Anspruch 7, **dadurch gekennzeichnet, daß** eine erneute Optimierung und Speicherung von Regelparametem bei Auftreten vorgegebener Bedingungen erfolgt.

9. Vorrichtung zur berührungslosen Temperaturregelung mit einer in einem Gehäuse aufgenommenen Temperaturmeßeinrichtung zur berührungslosen Temperaturmessung und einer ebenfalls in dem Gehäuse aufgenommenen Meßelektronik, welche einen Analog/Digitalwandler zur Digitalisierung der analogen Meßwerte sowie mindestens einen Analogausgang für die weitere Verarbeitung und Verwendung eines von der gemessenen Temperatur abhängigen Analogsignales aufweist, und mit einem digitalen Regler zur Erzeugung einer Stellgröße in Abhängigkeit von der Temperatur und einstellbaren Regelparametem, **dadurch gekennzeichnet, daß** der digitale Regler direkt in den digitalen Teil der Temperaturmeßeinrichtung integriert ist, so daß der mindestens eine Analogausgang der Temperaturmeßeinrichtung ein analoger Ausgang des digitalen Reglers ist.

10. Vorrichtung zur berührungslosen Temperaturregelung nach Anspruch 9, **dadurch gekennzeichnet, daß** die Meßeinrichtung ein Pyrometer und die Meßelektronik eine Pyrometerelektronik ist.

11. Vorrichtung zur berührungslosen Temperaturregelung nach Anspruch 9 oder 10, **dadurch gekennzeichnet, daß** der digitale Regler als Zweipunktregler, als PID-Regler oder als fuzzy-logic-Regler ausgebildet ist.

12. Vorrichtung nach einem der Ansprüche 9 bis 11, **dadurch gekennzeichnet, daß** die Temperaturstrahlung eines Gegenstandes, dessen Temperatur geregelt werden soll, über eine Linsenoptik erfaßt wird.

13. Vorrichtung nach einem der Ansprüche 9 bis 11, **dadurch gekennzeichnet, daß** eine Lichtleiteroptik zur Erfassung der zu regelnden Temperatur vorgesehen ist.

14. Vorrichtung nach einem der Ansprüche 9 bis 13, **dadurch gekennzeichnet, daß** die Meßeinrichtung Sensoren zur Erfassung von daß Temperaturstrahlung in mindestens zwei verschiedenen Spektralbereichen aufweist.

15. Vorrichtung nach einem der Ansprüche 9 bis 14, **dadurch gekennzeichnet, daß** der digitale Regler einen programmierbaren Rechner enthält.

16. Vorrichtung nach einem der Ansprüche 9 bis 14, **dadurch gekennzeichnet, daß** die Temperaturmeßeinrichtung einen zusätzlichen Analogausgang aufweist, dessen Signal en der aktuell gemessenen Temperatur entspricht.

## Claims

1. Method for non-contact temperature control, in which the temperature is measured in a non-contact manner using a temperature measuring device, and is sensed as an analogue value and subsequently digitalised, wherein furthermore a digital controller is provided that outputs a correcting variable dependent upon the temperature sensed and upon pre-determined control parameters, **characterised in that** the measurement data digitalised by the measuring electronics is processed in one and the same processor for the purpose of temperature determination and control that is integrated into the measuring electronics or respectively in the housing of the measuring electronics, so that the raw data in the processor is used for both sensing the current temperature and for calculating and generating a correcting variable, and the output of the measuring electronics, in the form of the controller output, thereby directly delivers a correcting variable for affecting the temperature to be regulated of an object.

2. Method according to claim 1, **characterised in that** a pyrometer is used as the temperature measuring device, and that the digital controller is housed in the housing of the pyrometer.

3. Method according to claim 1 or 2, **characterised in that** a correcting variable changing the temperature is only changed when a first limit value is gone below, or when a second limit value is exceeded.

4. Method according to one of claims 1 or 2, **characterised in that** control is performed in accordance with the PID method (proportional integral differential method).

5. Method according to one of claims 1 or 2, **characterised in that** control is performed on the basis of fuzzy logic principles.

6. Method according to one of claims 1 to 5, **characterised in that** in order to measure temperature, the radiation of the system to be measured is sensed in at least two different spectral ranges.

7. Method according to one of claims 1 to 6, **characterised in that** the control parameters are automatically optimised and memorised on the basis of measured temperature distributions.

8. Method according to claim 7, **characterised in that** renewed optimisation and memorising of control parameters is performed when pre-deterinined conditions occur.

9. Device for non-contact temperature control with a temperature measuring device for non-contact temperature measurement housed in a housing, and measuring electronics also housed in the housing that are provided with an analogue/digital converter for digitalising the analogue measurement values and at least one analogue output for further processing and the use of an analogue signal dependent upon the temperature measured, and with a digital controller for generating a correcting variable dependent upon the temperature and adjustable control parameters, **characterised in that** the digital controller is directly integrated into the digital part of the temperature measuring device so that the at least one analogue output of the temperature measuring device is an analogue output of the digital controller.

10. Device for non-contact temperature control according to claim 9, **characterised in that** the measuring device is a pyrometer, and the measuring electronics are pyrometer electronics.

11. Device for non-contact temperature control according or claim 9 or 10, **characterised in that** the digital controller is configured as a two-position controller, as a PID controller or as a fuzzy logic controller.

12. Device according to one of claims 9 to 11, **characterised in that** the thermal radiation of an object, the temperature of which is to be measured, is sensed by means of lens optics.

13. Device according to one of claims 9 to 11, **characterised in that** an optical guide system is provided for sensing the temperature to be controlled.

14. Device according to one of claims 9 to 13, **characterised in that** the measuring device is provided with sensors for sensing the thermal radiation in at least two different spectral ranges.

15. Device according to one of claims 9 to 14, **characterised in that** the digital controller includes a programmable calculator.

16. Device according to one of claims 9 to 14, **characterised in that** the temperature measuring device is provided with an additional analogue output, the signal of which corresponds to the temperature currently measured.

## Revendications

1. Procédé de régulation de température sans contact, dans lequel la température est mesurée sans contact au moyen d'un dispositif de mesure de température et est détectée sous forme analogique puis numérisée, un régulateur numérique étant en outre prévu qui délivre une grandeur de réglage qui est fonction de la température détectée et de paramètres de régulation prédéterminés, **caractérisé en ce que** les données de mesure numérisées par l'électronique de mesure sont traitées en vue de déterminer et réguler la température dans un et même processeur qui est intégré dans l'électronique de mesure ou le boîtier de l'électronique de mesure de telle sorte que les données brutes à l'intérieur du processeur sont utilisées aussi bien pour déterminer la température présente que pour calculer et générer une grandeur de réglage et par ce moyen la sortie de l'électronique de mesure en tant que sortie de régulateur délivre directement une grandeur de réglage destinée à influer sur la température à réguler d'un objet.

2. Procédé selon la revendication 1, **caractérisé en ce qu'**un pyromètre est utilisé comme appareil de mesure de température, et **en ce que** le régulateur numérique est logé dans le boîtier du pyromètre.

3. Procédé selon la revendication 1 ou 2, **caractérisé en ce qu'**une grandeur de réglage modifiant la température n'est modifiée que lorsqu'une première ou une seconde valeur de seuil est dépassée.

4. Procédé selon l'une des revendications 1 ou 2, **caractérisé en ce que** la régulation est effectuée suivant le procédé PID (procédé proportionnel, intégral et dérivé).

5. Procédé selon l'une des revendications 1 ou 2, **caractérisé en ce que** la régulation est effectuée sur la base du principe de la logique floue.

6. Procédé selon l'une des revendication 1 à 5, **caractérisé en ce que** le rayonnement du système à mesurer est détecté dans au moins deux domaines du spectre différents en vue de mesurer la température.

7. Procédé selon l'une des revendication 1 à 6, **caractérisé en ce que** les paramètres de régulation sont optimisés automatiquement sur la base des variations de la température mesurée et mémorisées.

8. Procédé selon la revendication 7, **caractérisé en ce qu'**une nouvelle optimisation et mémorisation de paramètres de régulation sont effectuées dans des conditions prédéterminées.

9. Dispositif de régulation de température sans contact comportant un dispositif de mesure de température logé dans un boîtier et destiné à mesurer sans contact une température et une électronique de mesure logée également dans le boîtier, laquelle comporte un convertisseur analogique-numérique pour numériser les valeurs de mesure analogiques ainsi qu'au moins une sortie analogique pour le traitement et l'utilisation ultérieurs d'un signal analogique fonction de la température mesurée, et un régulateur numérique pour générer une grandeur de réglage en fonction de la température et de paramètres de régulation réglables, **caractérisé en ce que** le régulateur numérique est intégré directement dans la partie numérique du dispositif de mesure de température de sorte que l'au moins une sortie analogique du dispositif de mesure de température est une sortie analogique du régulateur numérique.

10. Dispositif de régulation de température sans contact selon la revendication 9, **caractérisé en ce que** le dispositif de mesure est un pyromètre et l'électronique de mesure est une électronique pour pyromètre.

11. Dispositif de régulation de température sans contact selon la revendication 9 ou 10, **caractérisé en ce que** le régulateur numérique est conformé en régulateur à deux positions, en régulateur PID ou en régulateur à logique floue.

12. Dispositif selon l'une des revendications 9 à 11, **caractérisé en ce que** la température qui rayonne d'un objet et qui doit être régulée est détectée par un objectif à lentille.

13. Dispositif selon l'une des revendications 9 à 11, **caractérisé en ce qu'**il est prévu un objectif à guide de lumière pour détecter la température à réguler.

14. Dispositif selon l'une des revendications 9 à 13, **caractérisé en ce que** le dispositif de mesure comporte des capteurs destinés à détecter la température rayonnée dans au moins deux domaines du spectre.

15. Dispositif selon l'une des revendications 9 à 14, **caractérisé en ce que** le régulateur numérique comporte un calculateur programmable.

16. Dispositif selon l'une des revendications 9 à 14, **caractérisé en ce que** le dispositif de mesure de température comporte une sortie analogique supplémentaire dont le signal correspond à la température en cours de mesure.
